# EUROPEAN PATENT SPECIFICATION

(11) **EP 3 196 018 B1**
(45) Date of publication and mention of the grant of the patent: **17.07.2019**
(21) Application number: 15753302.7
(22) Date of filing: 13.01.2015
(51) Int. Cl.: B32B 37/12, G02F 1/1333, B32B 37/00

(54) **SUBSTRATE BONDING METHOD**
SUBSTRATBINDEVERFAHREN
PROCÉDÉ DE LIAISON DE SUBSTRAT

(30) Priority: 17.09.2014 CN 201410476433
(43) Date of publication of application: 26.07.2017
(73) Proprietor: BOE Technology Group Co., Ltd., Beijing 100015 (CN); Hefei Xinsheng Optoelectronics Technology Co. Ltd, Anhui 230012 (CN)
(72) Inventor: LUO, Hongqiang, Beijing 100176 (CN); XU, Zouming, Beijing 100176 (CN); FAN, Wenjin, Beijing 100176 (CN)
(74) Representative: Isarpatent
(86) International application number: PCT/CN2015/070614
(87) International publication number: WO 2016/041307

(56) References cited:
- CN-A- 101 515 079
- CN-A- 103 826 855
- JP-A- 2002 121 502
- US-A1- 2013 153 128

## Description

### TECHNICAL FIELD

The present disclosure relates to the field of display technology, in particular to a method for bonding substrates, a touch substrate and a display device.

### BACKGROUND

At present, electronic products with touch and display functions such as smart phones, computers and televisions have been widely applied. In a process of manufacturing a display screen with touch function of such products, two substrates each provided with functional layers are usually bonded, for example, a touch screen substrate may be bonded to a display panel.

Generally, a bonding process of bonding the above substrates includes following two types.

One is a sealant bonding method for bonding substrates by sealant. For example, when a touch screen substrate is bonded to a display panel by such method, the used sealant may be generally provided with a certain thickness, and then a gap may exist between the touch screen and the display panel after the bonding, which may result in that the touch screen and the display panel are not bonded tightly, thereby particulates such as dust are apt to enter into the gap and a touch performance may be influenced, and optical performance of the entire touch module may be worse due to the gap.

The other method is to bond directly the substrates fully by optical clear adhesive or optical clear resist. For example, when a touch screen substrate is bonded to a display panel by such method, the touch screen and the display panel needs to be cut, and the glass needs to be processed by mean of release filming if the touch screen and the display panel are bonded by the optical clear resist, thereby the cost is high and the operation is complex.

Comparatively, the cutting operation is not required and a light/heavy release film is used in the bonding by optical clear resist, and a single type of optical clear resist can be applied to various products of different sizes, and a thickness of the resist can be controlled, so the process is relatively simple, therefore such method has been widely applied. The optical clear resist includes a light curing or heat curing materials, which may be cured and cohered after suffering an irradiation or heating accordingly. Up to now, ways of coating optical clear resist for bonding include dispensing coating, screen printing coating and slit coating.

When the substrates are bonded by means of dispensing coating, the bubbles generated in the process of bonding may be pushed out by making use of flowing of the curable adhesive, and then more adhesive are used, therefore it is difficult to monitor and control phenomenon such as lack of adhesive and adhesive overflow and uniformity of thickness of the curable adhesive; in addition, this method cannot be applied to bonding irregular shapes.

It is difficult to monitor and control the uniformity of the thickness of the curable adhesive when the substrates are bonded by means of screen printing coating. In addition, a gluing process is complex, and cleaning of jigs is troublesome.

The thickness of the curable adhesive layer in an intermediate area can be monitored and controlled well in the bonding by means of slit coating, but the curable adhesive layer around the edge is generally thicker than the curable adhesive in the intermediate area, thereby bubbles may be apt to appear around the edge in the process of bonding. In addition, the edge of the curable adhesive may have an obvious slope angle due to gravity of the curable adhesive itself after the process of coating, so phenomenon such as the lack of adhesive/ adhesive overflow is difficult to be monitored and controlled in the process of substrates bonding. In addition, the curable adhesive may only be coated into a rectangle rather than irregular shapes.

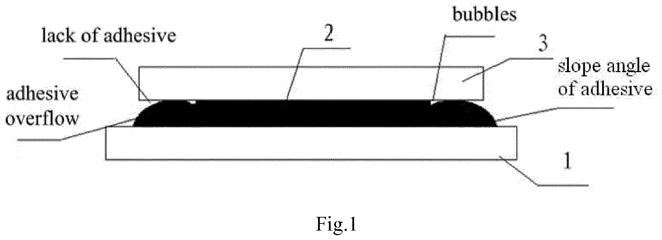

As shown in Fig.1, in the curable adhesive layer 2 configured to bond a first substrate 1 and a second substrate 2, bubbles may appear in the curable adhesive layer 2 due to the defects of the above coating. In addition, a curable adhesive slope angle may appear at the edge of the curable adhesive layer 2, and lack of adhesive may appear at an upper part of the slope angle, and adhesive overflow may appear at a lower part thereof.

A method for bonding substrates according to the relevant known art is also described in US 2013/0153128 A1. This document is however silent about a printing of a light or heat curing peelable adhesive.

Therefore, it is desired to improve flatness of the curable adhesive layer 2, reduce probability of appearance of bubbles, and avoid the lack of adhesive and adhesive overflow appearing at the edge of the curable adhesive layer.

### SUMMARY

The following issues existing in the related art is to be solved in the present disclosure, including: uniform thicknesses of adhesive layers, bubbles, lack of adhesive and adhesive overflow when bonding different functional substrates in a display device, which may degrade optical performance of the display device. Accordingly, a method for bonding substrate, a touch display panel and a display device are provided.

The technical scheme to solve the technical issues presented in the present disclosure is the method for bonding substrates according to claim 1, which includes:
arranging a light barrier frame at a surrounding area of a surface to be bonded of a first substrate;arranging an easily-removed layer on the light barrier frame;
coating a curable adhesive on the surface to be bonded of the first substrate;precuring the curable adhesive;removing the easily-removed layer and simultaneously removing the curable adhesive adhered on the easily-removed layer; and bonding a surface to be bonded of a second substrate to the curable adhesive on the first substrate, and
wherein the arranging the easily-removed layer on the light barrier frame comprises: printing a peelable adhesive on the light barrier frame to form the easily-removed layer, the peelable adhesive comprises a light curing or heat curing material, and
wherein after printing the peelable adhesive to form the easily-removed layer, the method further comprises: curing the easily-removed layer.

Optionally, the easily-removed layer has a tensile strength in a range of 10-30 kgf/mm².

Optionally, the arranging the easily-removed layer on the light barrier frame includes: cutting an easily-removed layer film formed from polyethylene terephthalate into a shape corresponding to the surface to be bonded of the first substrate; and attaching the cut easily-removed layer film to the light barrier frame to form the easily-removed layer.

Optionally, after printing the peelable adhesive to form the easily-removed layer, the method further includes: precuring the easily-removed layer.

Optionally, the curable adhesive is an ultraviolet-curing adhesive; the precuring includes irradiating the curable adhesive with ultraviolet at a dose of 100-200mj/cm².

Optionally, after bonding the second substrate, the method further includes: curing the curable adhesive.

Optionally, the first substrate is a glass cover plate, and the second substrate is a touch film or a touch glass; or the first substrate is a touch glass, and the second substrate is a liquid crystal display panel.

A touch substrate is further provided by the present disclosure, including a first substrate and a second substrate. The first and the second substrates are bonded by the above method for bonding substrates.

A display device is further provided by the present disclosure, including the above touch substrate.

In the process of manufacturing a touch display panel and a display device by the method for bonding substrates provided in the present disclosure, by steps such as arranging an easily-removed layer at a surrounding of a first substrate, coating and precuring a light curing adhesive, removing the easily-removed layer, the light curing adhesive may be formed into a desired shape (including irregular shapes). In addition, an adhesive layer of the light curing adhesive has a uniform thickness, smooth surface and an edge slope angle approaching to 90°. Furthermore, bonding bubbles may be reduced, and phenomenon such as lack of adhesive and adhesive overflow may be suppressed in the bonding process, thereby guaranteeing optical performance of the display device.

### BRIEF DESCRIPTION OF THE DRAWINGS

Fig.1 is a schematic view showing a bonding state of substrates in the related art;
Fig. 2 is a flow chart of a method for bonding substrates according to the present disclosure;
Fig.3 is a schematic view showing a structure of a first substrate provided with an easily-removed layer according to one embodiment of the present disclosure;
Fig.4 is a schematic view showing a structure of the first substrate coated with curable adhesive according to one embodiment of the present disclosure;
Fig.5 is a schematic view showing a structure of the first substrate from which the easily-removed layer is removed according to one embodiment of the present disclosure; and
Fig.6 is a schematic view showing a structure of the first substrate and a second substrate which are bonded together according to one embodiment of the present disclosure.

### Reference numbers in the drawings represent:

1. first substrate; 2. curable adhesive layer; 3. second substrate; 4. light barrier frame; 5. easily-removed layer

### DETAILED DESCRIPTION

To make the technical schemes better understood by those skilled in the art, the present disclosure may be described in details in conjunction with drawings and embodiments.

### Embodiment one

A method for bonding substrates is provided in the embodiment and includes:
arranging a light barrier frame at a surrounding area of a surface to be bonded of a first substrate;
arranging an easily-removed layer on the light barrier frame;
coating curable adhesive on the surface to be bonded of the first substrate;
precuring the curable adhesive;
removing the easily-removed layer and simultaneously removing the curable adhesive adhered on the easily-removed layer; and
bonding a surface to be bonded of a second substrate and the curable adhesive on the first substrate.

When manufacturing a touch display panel and a display device by the method of bonding substrates provided in the present disclosure, by the steps such as arranging the easily-removed layer at the surrounding of the first substrate, coating and precuring a light-curing adhesive and removing the easily-removed layer, the light-curing adhesive may be formed into a required shape (including irregular shapes). Further, an adhesive layer of the light-curing adhesive has a uniform thickness, a smooth surface and an edge slope angle approaching to 90°. Furthermore, bonding bubbles may be effectively reduced, and phenomenon such as lack of adhesive and adhesive overflow may be suppressed in the bonding process, thereby guaranteeing optical performance of the display device.

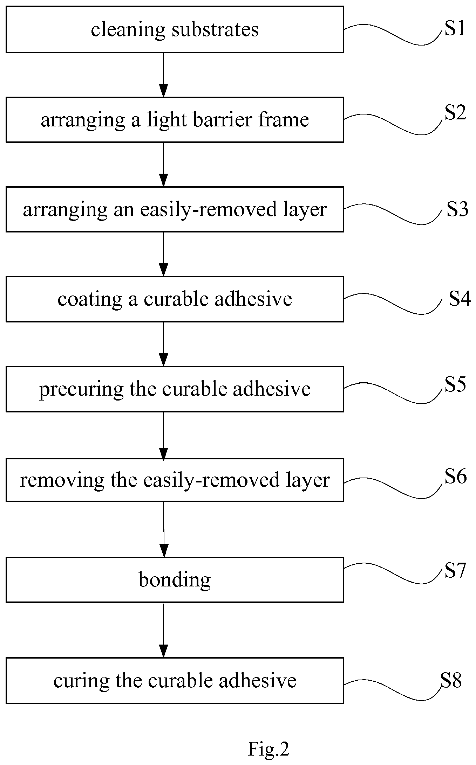

To be specific, as shown in Fig.2, the process of bonding substrates in one embodiment of present disclosure includes the following steps.

At S1, cleaning a substrate.

To be specific, a surface to be bonded of a first substrate 1 (e.g., glass cover plate (CG), touch glass (OGS)) is cleaned by means of plasma cleaning. The method of plasma cleaning belongs to the prior art, and the description thereof is omitted herein.

At S2, arranging a light barrier frame.

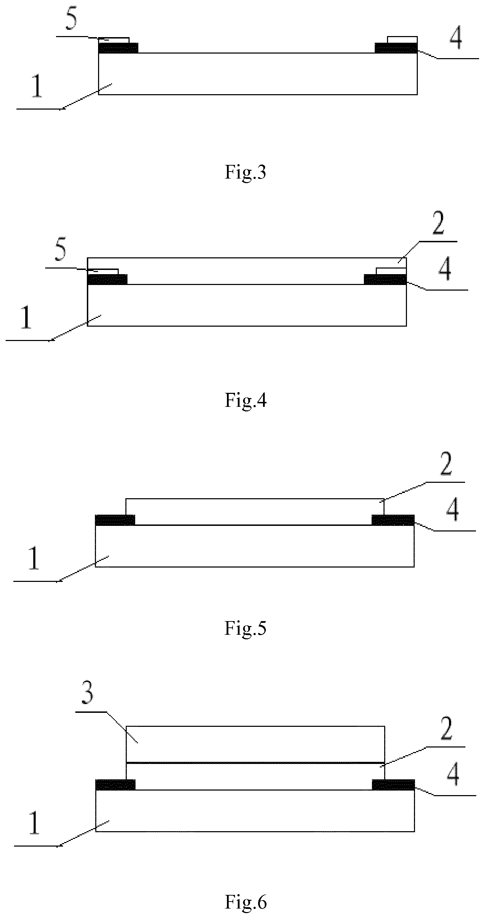

To be specific, as shown in Fig.3, a light barrier frame 4 is arranged at a surrounding area of a surface to be bonded of the first substrate 1. The light barrier frame 4 may be made of light-absorbing material by means of printing;
An inside of the light barrier frame 4 is a subsequently-formed light transmitting area of the display device, and the light barrier frame 4 is configured to form a light shielding area of the display device.

At S3, arranging an easily-removed layer.

To be specific, as shown in Fig.3, an easily-removed layer 5 is arranged on the light barrier frame 4, i.e., the easily-removed layer 5 is arranged within the light shielding area.

Alternatively, tensile strength of the easily-removed layer 5 is in a range of 10-30 kgf/mm², thereby guaranteeing that the easily-removed layer may have appropriate strength and the easily-removed layer 5 may be removed completely in a subsequent process of removing.

Alternatively, the easily-removed layer 5 may be formed by attaching, to the light barrier frame 4, a film formed by polyethylene terephthalate.

In the process of attaching the easily-removed layer 5, the film configured to form the easily-removed layer 5 may be cut according to a shape of the surface to be bonded of the first substrate 1 to obtain a desired shape, and then is attached to the light barrier frame 4 on the first substrate 1.

It should be understood that the easily-removed layer 5 may further be formed by printing a peelable adhesive on the light barrier frame 4. For example, the peelable adhesive may be printed by means of screen printing. The screen printing belongs to the prior art, and the description thereof is omitted herein. The peelable adhesive includes light curing or heat curing materials which may be cured after suffering ultraviolet irradiation or heating. In this embodiment, the peelable adhesive is cured after the printing is completed. Curing conditions may be selected based on adopted light curing or heat curing materials.

At S4, coating curable adhesive;
To be specific, as shown in Fig.4, the curable adhesive may be an ultraviolet-curing adhesive, e.g., the KAYARAD KSP-501 or Dexerials 12F032-4 ultraviolet-curing adhesive available on market. The ultraviolet-curing adhesive is coated on the entire surface to be bonded of the entire first substrate 1 by means of slit coating, to form a curable adhesive layer 2. The slit coating belongs to the prior art, and the description thereof is omitted herein.

It should be understood that the curable adhesive may be a heat curing adhesive.

At S5, precuring the curable adhesive;
To be specific, the curable adhesive layer 2 formed by the ultraviolet-curing adhesive is precured under ultraviolet-irradiation dose of 100-200mj/cm².

It should be understood that, when the curable adhesive is heat curing adhesive, the substrate on which the heat curing adhesive is coated is heated to perform the procuring. Heat curing conditions may be determined based on the adopted heat curing adhesive.

At S6, removing the easily-removed layer.

To be specific, as shown in Fig.5, the easily-removed layer 5 is removed, a part of the curable adhesive layer 2 on the easily-removed layer 5 is also removed, and a remained part of the curable adhesive layer 2 is formed into a desired shape with a uniform thickness, a smooth surface and an edge slope angle approaching to 90°.

At S7, bonding a second substrate.

To be specific, as shown in Fig.6, a surface to be bonded of a second substrate 3 (e.g., liquid crystal display panel) is aligned with a surface to be bonded of the first substrate 1, and the two substrates are bonded by the curable adhesive layer 2, to form a touch display panel. It should be noted that, the first and the second substrates in the embodiment are exemplary rather than restrictive. For example, the second substrate 3 may a touch film, a touch glass or a liquid crystal display panel. When the first substrate is a glass cover plate, the second substrate may be a touch film or a touch glass; alternatively, when the first substrate is a touch glass, the second substrate may be a liquid crystal display panel; and vice versa.

At S8, curing the curable adhesive.

To be specific, the formed curable adhesive layer 2 of the touch display panel is cured by irradiating ultraviolet. For example, the ultraviolet-curing adhesive is cured completely by irradiating ultraviolet at a dose of 3500mj/cm², so as to realize a better bonding of the first and the second substrates.

It should be noted that, when the curable adhesive layer 2 is formed from heat curing adhesive, the curable adhesive is cured in corresponding heat curing conditions.

Alternatively, other functional layers are further formed on the above display panel formed by means of bonding, so as to complete the manufacturing of the display device.

### Embodiment two

A touch substrate is provided in the embodiment. The touch substrate includes a first substrate and a second substrate. The first substrate may be a touch substrate, and the second substrate may be a display panel; the touch panel and the display panel are bonded by the above method for bonding substrates.

The touch substrate provided in the embodiment is manufactured by the above method for bonding substrates, therefore the touch substrate has good optical performance.

### Embodiment three

A display device is provided in the embodiment. The display device includes a touch substrate.

The display device provided in the embodiment includes the above touch substrate, therefore the display device has good optical performance.

It may be understood that, the above embodiments are merely the examplary embodiments for illustrating principles of the present disclosure, but the present disclosure is not limited thereto.

## Claims

1. A method for bonding substrates, comprising:
a) arranging (S2) a light barrier frame (4) at a surrounding area of a surface to be bonded of a first substrate (1);
b) arranging (S3) an easily-removed layer (5) on the light barrier frame (4);
c) coating (S4) a curable adhesive (2) on the surface to be bonded of the first substrate (1);
d) pre-curing (S5) the curable adhesive (2);
e1) removing (S6) the easily-removed layer (5) and simultaneously removing the curable adhesive (2) adhered on the easily-removed layer (5); and
e2) bonding (S7) a surface to be bonded of a second substrate (3) to the curable adhesive (2) on the first substrate (1), and
f) wherein the arranging the easily-removed layer (5) on the light barrier frame (4) comprises: printing a peelable adhesive on the light barrier frame (4) to form the easily-removed layer (5), the peelable adhesive comprises a light curing or heat curing material, and
g) wherein after printing the peelable adhesive to form the easily-removed layer (5), the method further comprises: curing the easily-removed layer (5).

2. The method according to claim 1, wherein the easily-removed layer (5) has a tensile strength in a range of 10-30 kgf/mm².

3. The method according claims 1 or 2, wherein the curable adhesive (2) is ultraviolet-curing adhesive; the precuring comprises irradiating the curable adhesive (2) with ultraviolet at a dose of 100-200mj/cm².

4. The method according to claim 1, wherein after bonding the second substrate (3), the method further comprises:
curing the curable adhesive (2).

5. The method according to claim 1, wherein the first substrate (1) is a glass cover plate, and the second substrate (3) is a touch film or a touch glass; or
the first substrate (1) is a touch glass, and the second substrate (3) is a liquid crystal display panel.

## Patentansprüche

1. Verfahren zum Verbinden von Substraten, umfassend:
a) Anordnen (S2) eines leichten Barriererahmens (4) in einem umliegenden Bereich einer zu verbindenden Oberfläche eines ersten Substrats (1);
b) Anordnen (S3) einer leicht entfernbaren Schicht (5) auf dem leichten Barriererahmen (4);
c) Aufbringen (S4) eines härtbaren Klebstoffs (2) auf die zu verbindende Oberfläche des ersten Substrats (1);
d) Vorhärten (S5) des härtbaren Klebstoffs (2);
e1) Entfernen (S6) der leicht entfernbaren Schicht (5) und gleichzeitig Entfernen des härtbaren Klebstoffs (2), der an der leicht entfernbaren Schicht (5) haftet; und
e2) Binden (S7) einer zu verbindenden Oberfläche eines zweiten Substrats (3) an den härtbaren Klebstoff (2) an dem ersten Substrat (1); und
f) wobei das Anordnen der leicht entfernbaren Schicht (5) auf dem leichten Barriererahmen (4) umfasst: Drucken eines abziehbaren Klebstoffs auf den leichten Barriererahmen (4), um die leicht entfernbare Schicht (5) zu bilden, wobei der abziehbare Klebstoff ein lichthärtendes oder wärmehärtendes Material umfasst, und
g) wobei das Verfahren nach dem Drucken des abziehbaren Klebstoffs zum Bilden der leicht entfernbaren Schicht (5) ferner umfasst: Härten der leicht entfernbaren Schicht (5).

2. Verfahren gemäß Anspruch 1, wobei die leicht entfernbare Schicht (5) eine Zugfestigkeit in einem Bereich von 10-30 kgf/mm² aufweist.

3. Verfahren gemäß einem der Ansprüche 1 oder 2, wobei der härtbare Klebstoff (2) ein ultravioletthärtender Klebstoff ist; das Vorhärten Bestrahlen des härtbaren Klebstoffs (2) mit Ultraviolettstrahlung mit einer Dosis von 100-200 mJ/cm² umfasst.

4. Verfahren gemäß Anspruch 1, wobei das Verfahren nach dem Binden des zweiten Substrats (3) ferner umfasst:
Härten des härtbaren Klebstoffs (2).

5. Verfahren gemäß Anspruch 1, wobei das erste Substrat (1) eine Glas-Deckplatte ist und das zweite Substrat (3) ein Berührungsfilm oder ein Berührungsglas ist; oder das erste Substrat (1) ein Berührungsglas ist und das zweite Substrat (3) ein Flüssigkristall-Anzeigefeld ist.

## Revendications

1. Procédé de liaison de substrats, consistant à :
a) agencer (S2) un cadre formant barrière lumineuse (4) au niveau d'une zone environnante d'une surface devant être liée d'un premier substrat (1) ;
b) agencer (S3) une couche facile à enlever (5) sur le cadre formant barrière lumineuse (4) ;
c) revêtir (S4) un adhésif durcissable (2) sur la surface devant être liée du premier substrat (1) ;
d) prédurcir (S5) l'adhésif durcissable (2) ;
e1) enlever (S6) la couche facile à enlever (5) et enlever simultanément l'adhésif durcissable (2) mis à adhérer sur la couche facile à enlever (5) ; et
e2) lier (S7) une surface devant être liée d'un second substrat (3) à l'adhésif durcissable (2) sur le premier substrat (1), et
f) dans lequel l'agencement de la couche facile à enlever (5) sur le cadre formant barrière lumineuse (4) consiste à : imprimer un adhésif pelable sur le cadre formant barrière lumineuse (4) pour former la couche facile à enlever (5), le matériau adhésif pelable comprenant un matériau durcissant à la lumière ou durcissant à la chaleur, et
g) dans lequel, après l'impression de l'adhésif pelable pour former la couche facile à enlever (5), le procédé consiste en outre à : durcir la couche facile à enlever (5).

2. Procédé selon la revendication 1, dans lequel la couche facile à enlever (5) présente une résistance à la traction dans une plage de 10 à 30 kgf/mm².

3. Procédé selon la revendication 1 ou 2, dans lequel l'adhésif durcissable (2) est un adhésif durcissant aux ultraviolets ; le prédurcissement consiste à exposer l'adhésif durcissable (2) aux ultraviolets à une dose de 100 à 200 mJ/cm².

4. Procédé selon la revendication 1, dans lequel, après la liaison du second substrat (3), le procédé consiste en outre à :
durcir l'adhésif durcissable (2).

5. Procédé selon la revendication 1, dans lequel le premier substrat (1) est une plaque de recouvrement en verre, et le second substrat (3) est un film tactile ou un verre tactile ; ou
le premier substrat (1) est un verre tactile, et le second substrat (3) est un panneau d'affichage à cristaux liquides.
